Europäisches Patentamt

European Patent Office

Office européen des brevets

(11) Publication number: **0 103 326**
**B1**

(12) EUROPEAN PATENT SPECIFICATION

(45) Date of publication of patent specification: **15.03.89**

(21) Application number: **83201202.5**

(22) Date of filing: **17.08.83**

(51) Int. Cl.⁴: **A 01 D 90/10,** A 01 F 29/00

(54) **A bulk trailer.**

(30) Priority: **18.08.82 NL 8203242**

(43) Date of publication of application:
**21.03.84 Bulletin 84/12**

(45) Publication of the grant of the patent:
**15.03.89 Bulletin 89/11**

(84) Designated Contracting States:
**BE DE FR GB NL**

(56) References cited:
**DE-A-1 482 238
DE-A-1 556 679
DE-A-2 810 676
DE-B-1 233 328
FR-A-1 528 937**

(73) Proprietor: **Schuitemaker Machines B.V.
Nijverheidsstraat 30
NL-7461 AD Rijssen (NL)**

(72) Inventor: **Kloosterhuis, Jan Harm
Zuiderstraat 130
NL-7462 CR Rijssen (NL)**

(74) Representative: **Urbanus, Henricus Maria, Ir.
et al
c/o Vereenigde Octrooibureaux Nieuwe
Parklaan 107
NL-2587 BP 's-Gravenhage (NL)**

Courier Press, Leamington Spa, England.

## Description

The invention relates to a bulk trailer, in particular a feed distributing wagon, which is provided above one of its edge zones with rotary loosening means, comprising one or more loosening rollers having on their surfaces projections by means of which fodder loaded on the wagon and often compacted can be loosened and be discharged via said edge zone of the wagon to a feed lot, there being provided adjacent the or each loosening roller at the supply end a first barred cage whose substantially parallel bars are arranged to face the loaded fodder, extend a short distance from the roller surface, partly follow the roller circumference and extend essentially upwardly from approximately the top level of the respective roller.

A similar bulk trailer disclosed in German Offenlegungsschrift 1,482,238 relates to a loading and unloading apparatus wherein the unloading apparatus is obtained by reversing the movement of the loading apparatus. The teeth of the loosening roller in this known apparatus extend between the bars 22 of the discharge channel. In this apparatus, no material is displaced between the bars, but exclusively through a channel formed ahead of the bars. As a result, it is possible that whole lumps of cattle food, such as silage, are pressed through the channel. Another drawback is that dosaging may not be uniform.

It is an object of the invention to avoid these drawbacks.

To this effect according to the invention, as the projections of the roller on rotation of the roller move upwardly, they catch the loaded fodder, and said projections than convey the fodder across the bars of the cage and over the loosening roller or rollers, so that the fodder eventually drops onto the feed lot. Thus in practice, even with a long-fibred product, no problems occur during unloading.

In further elaboration of the invention there can be provided a second barred cage at the discharge end adjacent the or each loosening roller, the bars of said second cage extending about the roller circumference portion not embraced by the first cage, at a distance from the roller circumference increasing from the upper level of the roller downwardly.

In a feed distributing carrier conventionally comprising a bottom conveyor for supplying mostly compacted fodder to the loosening means, according to the invention, the downwardly extended bars of the first cage may be bent back about the discharge end of the bottom conveyor and be fixed e.g. to a cross bar.

The top ends of the bars of the first barred cage according to the invention, seen in the fodder supply direction, may be inclined backwardly so as to force the fodder downwardly in the direction of the loosening means.

Preferably, the portions of the bars of the first cage positioned above the roller are provided at the downstream end with supporting plates for increasing the bending strength of said bars when loaded by the fodder pressed thereagainst.

The fodder also presses against the bars of the first cage in the zone wherein these are provided at a short interspace from the roller, following its circumference. The bars may yield under the influence of the pressure exerted thereon and come into contact with the roller surface. In order to avoid wear and tear under these circumstances, according to the invention, the bars in the relevant zone may comprise a wear-resistant slide bearing.

Some embodiments of the feed distributing carrier according to the invention will now be described, by way of example, with reference to the accompanying drawings, in which:

Fig. 1 is a diagrammatic part-sectional side view of the feed distributing carrier;

Fig. 2 is a top view of the apparatus according to Fig. 1 on a different scale, and

Fig. 3 shows a variant of the barred cage embodiment.

According to the drawings, showing only the elements of the feeding distributing carrier that are necessary for a good understanding of the invention, said carrier comprises a platform 1 having a bottom conveyor 2 supplying product 3 loaded in the feed distributing carrier to loosening means 4. The fodder loosened by the loosening means 4 falls over the free edge zone of the carrier positioned at the right hand side of the loosening means 4, either directly into a fodder trough, or onto a cross-conveyor.

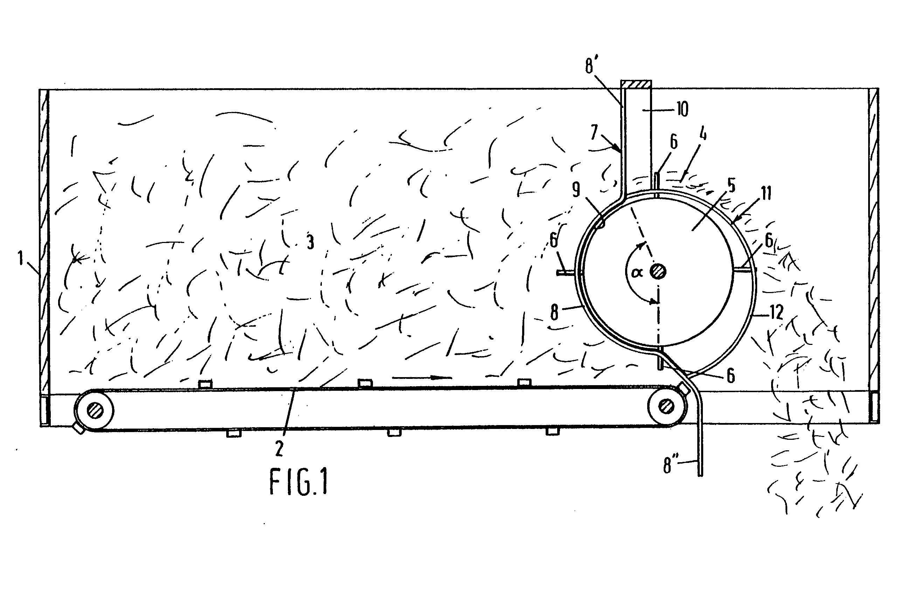

In embodiment shown in Fig. 1, the loosening means comprise a rotary loosening roller 5. It is clear that also a plurality of loosening rollers can be used or, as known in the technical field concerned, as set of endless rotary chains having cross-bars and pins via which the mostly compacted fodder is loosened. In the embodiment shown, the roller 5 comprises on its surface circumferentially and axially spaced loosening projections 6.

According to the invention, there is provided at the left hand side i.e. the supply end of the roller 5, a barred cage 7 whose bars 8 embrace a circumferential zone of the roller 5 indicated by the adjustable angle α at the centre. In the zone α the mutually parallel bars 8, extending in vertical planes perpendicularly to the axis of the roller 5, are disposed at a short interspace from the roller surface, while at the side facing the facing the roller 5 they may be fitted with a slide bearing 9.

The bars 8 extend from approximately the top level of the roller 5 substantially upwardly, in order to retain the top portion of the fodder mass 3 in the platform 1. In order to better take up the pressure to be anticipated, there are provided at the downstream end of the bars in the respective zones, supporting plates 10 on each of the upwardly extending bar portions 8'.

The bars 8 may be extended at the bottom with downwardly extending bar portions 8".

At the downstream end of the loosening roller 5, there is provided a second barred cage 11 whose bars 12 extend substantially in the same vertical planes as the bars 8 and which, from the top to the bottom, have an increasing distance to the surface of the roller 5.

The loosening projections 6 rotate in the zones situated between the vertical planes wherein the bars 8 and 12 are positioned.

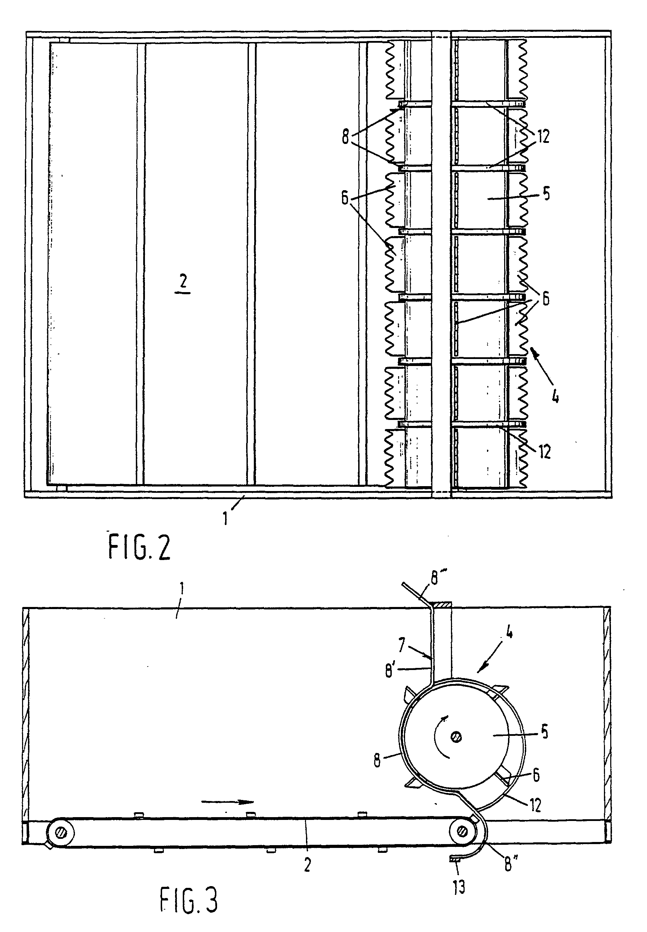

The upwardly extending portions 8' of the bars 8 (through which portions 8' the fodder is drawn) as shown in Fig. 3 by 8''', may be bent back rearwardly, in Fig. 1 to the left, in order to thus form a downwardly directed guide for fodder 3 possibly congested.

The lower ends of the downward extension of the bar portions 8" may be bent back rearwardly about the right hand end of the bottom conveyor 2 and be fixed to the cross bar 13.

It wil be clear that a great many modifications are possible within the scope of the invention: for instance, the upwardly extending portion 8' of the bars 8 may extend at an angle relative to the position shown in Figs. 1 and 3. Also the angle α (see Fig. 1) may be chosen different. Also the radial distance from the barred cage to the loosening roller may be adjustable. To this effect, the apparatus may comprise adjusting means, enabling to conveniently control the quantity of roughage discharged per unit of time. Naturally, also the bars of the second cage may be similarly adjustable.

## Claims

1. A bulk trailer (1), in particular a feed distributing wagon, which is provided above one of its edge zones with rotary loosening means, comprising one or more loosening rollers (5) having on their surfaces projections (6) by means of which fodder (3) loaded on the wagon and often compacted can be loosened and be discharged via said edge zone of the wagon to a feed lot, there being provided adjacent the or each loosening roller at the supply end a first barred cage (7) whose substantially parallel bars (8) are arranged to face the loaded fodder, exted a short distance from the roller surface, partly follow the roller circumference and extend essentially upwardly (8') from approximately the top level of the respective roller, characterized in that as the projections (6) of the roller (5) on rotation of the roller move upwardly, they catch the loaded fodder, and said projections then convey the fodder across the bars of the cage and over the loosening roller or rollers (5), so that the fodder eventually drops onto the feed lot.

2. A trailer according to claim 1, characterized in that a second barred cage (11) is provided at the discharge end adjacent the or each loosening roller (5), the bars of said second cage extending about the roller circumference portion not embraced by the first cage, at a distance from the roller circumference increasing from the upper level of the roller downwardly.

3. A trailer according to claim 1 or 2, characterized in that the bars of the first cage (7) extend downwardly underneath the roller.

4. A trailer according to claim 3, comprising a bottom conveyor (2) for supplying mostly compacted fodder (3) to the loosening means (2), characterized in that the downwardly extended bars (8") of the first cage (7) are bent back about the discharge end of the bottom conveyor and are fixed, e.g. to a cross bar (13).

5. A trailer according to any one of the preceding claims, characterized in that the top ends (8''') of the bars of the first barred cage (7), seen in the fodder supply direction, are inclinded backwardly so as to force the fodder downwardly in the direction of the loosening means.

6. A trailer according to any one of the preceding claims, characterized in that the portions (8') of the bars of the first cage (7) situated above the roller (5) at the downstream end, are provided with supporting plates (10).

7. A trailer according to any one of the preceding claims, characterized in that the bars (8) of the first cage (7) in the zone wherein the extend a short distance from the roller circumference, are fitted with a slide bearing (9).

## Patentansprüche

1. Abladewagen (1), insbesondere Futterverteilwagen, der oberhalb einer seiner Randzonen mit einer umlaufenden Auflöseeinrichtung versehen ist, enthaltend eine oder mehrere Auflöserollen (5), die an ihren Oberflächen mit Vorsprüngen (6) versehen sind, mittels denen Futter, das auf den Wagen geladen ist und häufig zusammengedrückt ist, gelöst und über die genannte Randzone des Wagens auf einen Futterplatz abgegeben werden kann, wobei benachbart der oder den Auflöserollen am Zuführende ein erster Stangenkäfig (7) angeordnet ist, dessen im wesentlichen parallele Stangen (8) so angeordnet sind, daß sie dem aufgeladenen Futter gegenüberstrehen, sich um eine kurze Distanz zu der Rollenoberfläche erstrekken, dem Rollenumfang teilweise folgen und sich etwa von der obersten Höhe der entsprechenden Rolle im wesentlichen nach oben (8') erstrecken, dadurch gekennzeichnet, daß, wenn sich die Vorsprünge (6) der Rolle (5) beim Drehen der Rolle nach oben bewegen, sie das gelandene Futter ergreifen und dann über die Stangen des Käfigs und über die Auflöserolle(n) (5) fördern, so daß das Futter ggf. auf den Futterplatz fällt.

2. Wagen nach Anspruch 1, dadurch gekennzeichnet, daß ein zweiter Stangenkäfig (11) auf der Abgabeseite benachbart der oder den Auflöserollen (5) angeordnet ist, wobei sich die Stangen des zweiten Käfigs um den Rollenumfangsabschnitt erstrecken, der nicht von den ersten Käfig umgeben ist, wobei die Distanz vom Rollenumfang vom oberen Niveau der Rolle nach unten zunimmt.

3. Wagen nach Anspruch 1 oder 2, dadurch gekennzeichnet, daß die Stangen des ersten Käfigs (7) sich nach unten unter die Rolle erstrekken.

4. Wagen nach Anspruch 3, enthaltend einem Bodenförderer (2) zum Zuführen von am meisten verdichtetem Futter (3) zu der Auflöseeinrichtung (2), dadurch gekennzeichnet, daß die sich nach unten erstreckenden Stangen (8″) des ersten Käfigs (7) um das Abgabeende des Bodenförderers zurückgebogen sind und beispeilsweise an einer Querstange (13) befestigt sind.

5. Wagen nach einem der vorhergehenden Ansprüche, dadurch gekennzeichnet, daß die oberen Enden (8‴) der Stangen des ersten Stangenkäfigs (7), gesehen in Futterzuführrichtung, nach hinten geneigt sind, um das Futter in der Richtung der Auflöseeinrichtung nach unten zu drücken.

6. Wagen nach einem der vorhergehenden Ansprüche, dadurch gekennzeichnet, daß die Abschnitte (8′) der Stangen des ersten Käfigs (7), die über der Rolle (5) am stromabwärtigen Ende gelegen sind, mit Tragplatten (10) versehen sind.

7. Wagen nach einem der vorhergehenden Ansprüche, dadurch gekennzeichnet, daß die Stangen (8) des ersten Käfigs (7) in dem Bereich, in dem sie sich eine kurze Distanz vom Rollenumfang erstrecken, mit einem Gleitlager (9) versehen sind.

## Revendications

1. Remorque déchargeuse (1), en particulier, véhicule pour la distribution d'aliments tels que fourrages et autres, qui est pourvu, au-dessus de l'une de ses zones latérales, d'un dispositif de détassement ou de désagrégation rotatif, comprenant un ou plusieurs rouleaux-détasseurs (5) dont la surface est garnie d'éléments saillants (6) au moyen desquels le fourrage (3) qui a été chargé sur le véhicule et qui est sourvent compacté, peut être détassé et déchargé par cette zone latérale du véhicule sur un plan d'alimentation, et sur lequel ont été prévues, près du ou près de chaque rouleau-détasseur, à l'extrémité d'entrée du fourrange ou autre, une première cage à barreaux (7), dont les barreaux pratiquement parallèles 8) sont disposés en face du fourrage chargé, s'étendent à une courte distance de la surface du rouleau, en suivant partiellement le contour de sa circonférence et s'étendent essentiellement vers le haut (8′) approximativement à partir du niveau supérieur du rouleau correspondant, caractérisé en ce que les élements saillants (6) du rouleau (5) se déplacent vers le haut quand le rouleau tourne, attrapent le fourrage chargé, puis le transportent à travers les barreaux de la cage et l'entraînent au-dessus du oudes rouleaux-détasseurs (5), de sorte que ce dernier tombe éventuellement sur le plan d'alimentation.

2. Remorque selon la revendication 1, caractérisé en ce qu'une seconde cage à barreaux (11) est prévue à l'extrémité par laquelle le fourrage est déchargé, près du ou près de chaque rouleau-détasseur (5), les barreaux de cette seconde cage s'étendant autour de la circonférence non entourée par la première cage, à une distance de la circonférence du rouleau croissant vers le bas à partir du niveau supérieur.

3. Remorque selon la revendication 1 ou 2, caractérisée en ce que les barreaux de la première cage (7) s'étendent vers le bas jusque sous le rouleau.

4. Remorque selon la revendication 2, qui comprend un convoyeur de plancher (2) qui entraîne le fourrage (3), en majorité tassé ou compacté, vers le dispositif de détassement caractérisée en ce que les barreaux prolongés vers le bas (8″) de la première cage (7) sont pliés en arrière autour de l'extrémité d'évacuation du convoyeur de plancher et sont fixés, par exemple, à une traverse (13).

5. Remorque selon l'une quelconque des revendications précédentes, caractérisée en ce que les extrémités supérieures (8″) des barreaux de la première cage (7) sont, en considérant la direction d'entraînement du fourrage vers le bas dans la direction du dispositif de détassement.

6. Remorque selon l'une quelconque des revendications précédentes, caractérisée en en que les parties (8′) des barreaux de la première cage (7) situées au-dessus du rouleau (5) à l'extrémité d'aval, sont pourvues de plaques de support (10).

7. Remorque selon l'une quelconque des revendications précédentes, caractérisé en ce que les barreaux (8) de la première dage (7) sont pourvus, dans la zone où ils s'étendent à peu de distance de la circonférence du rouleau, d'une garniture de glissement (9).

FIG.1

FIG.2

FIG.3